**Europäisches Patentamt**

**European Patent Office**

**Office européen des brevets**

(11) Publication number: **0 125 074**

**A2**

(12) # EUROPEAN PATENT APPLICATION

(21) Application number: **84302830.9**

(51) Int. Cl.³: **H 04 N 9/02**

(22) Date of filing: **26.04.84**

(30) Priority: **28.04.83 US 489579**

(43) Date of publication of application:
**14.11.84 Bulletin 84/46**

(84) Designated Contracting States:
**AT BE CH DE FR GB IT LI LU NL SE**

(71) Applicant: **Riddle, David**
**9400 Wystone Avenue**
**Northridge California 91324(US)**

(71) Applicant: **Seiderman, Maurice**
**1897 Highway 101 West**
**Sequin Washington 98382(US)**

(72) Inventor: **Riddle, David**
**9400 Wystone Avenue**
**Northridge California 91324(US)**

(72) Inventor: **Seiderman, Maurice**
**1897 Highway 101 West**
**Sequin Washington 98382(US)**

(74) Representative: **Haggart, John Pawson et al,**
**Page, White & Farrer 5 Plough Place New Fetter Lane**
**London, EC4A 1HY(GB)**

(54) **Method and apparatus for producing light patterns.**

(57) Light patterns are produced by directing a television camera (10) at the screen (20) of a television monitor (12) driven by the video output signal of the camera (10). A beam splitter (24) is located in the optical path of the camera (10) between the camera (10) and monitor (12). The beam splitter (24) and a light source (26), off-axis with respect to the camera (10), may be employed to introduce light, varying in position or intensity, into the system to produce varying patterns on the television monitor (12).

FIG.1

0125074

## METHOD AND APPARATUS FOR PRODUCING LIGHT PATTERNS

The present invention relates to techniques for producing light patterns, to permit creative manipulation of operating parameters of optically and electrically coupled television equipment.

It is known in the art to use television monitors as a means for creating aesthetic effects not explicitly representational of a photographed subject. Computer generated signals have been used to create abstract patterns or representational simulations in devices as diverse as arcade games and computer aided design systems. Other tecniques have employed the application of analog signals such as electronic replicas of music to create patterns on a cathode-ray tube. See U.S. Patent No. 3,940,789 to Kratz.

The creation of abstract video art requires a comfortable cooperation between the artist and the display hardware. Creation of displays in real time requires rapid, expressive response of the media to the artists' manipulation. While these goals are in some respects achievable with computer aided systems, variety, spontenity and responsiveness may be lacking. Moreover, the hardware and software required for such systems may be expensive and unwieldy.

It is an object of the present invention to provide an easily manipulated video display system for producing interesting, varied light patterns.

It is another object of the present invention to provide an expressive media for producing varying light displays in real time.

It is another object of the present invention to provide an inexpensive system for producing light display which employ readily available, multipurpose video equipment.

It is known in the prior art that interesting light patterns can be produced by directing a television camera at a television monitor receiving the signal from the camera. In some instances a simulation of an infinite succession of smaller screen images produces a corridor-like effect. The combined effects of zooming and rotation of the camera are known to produce a type of kaleidoscopic effect. These prior art techniques involve the use of ambient light or images within the field of view of the camera and often lack variation and interest.

It is a further object of the present invention to provide varied and interesting light display with an optically and electrically coupled video camera and television monitor.

These and other objects and features will be apparent from the disclosure including the appended claims and drawings.

The present invention relates to techniques for producing light patterns with a combination of electrically and optically coupled television monitor, television camera, and light source. The television camera is directed at a display screen of the television monitor so that a field view of the camera includes the display screen. An output video signal of the camera is applied to circuitry of the television monitor controlling, in real time, the picture on the display screen of the television monitor. A seed light source, such as a light bulb, light bulb array or second television monitor, is provided and located out of the field of view of the television camera. A beam splitter is located between the monitor and camera in the field of view of the camera, the beam splitter operating to reflect light from the light source toward the camera and to transmit light from the monitor to the camera. The beam splitter and the display screen of the television monitor may occupy, at least in part, a co-extensive portion of the field of view of the camera.

In a preferred embodiment of the present invention the beam splitter is a partially silvered planar mirror, the plane of the mirror being oriented at an angle with respect to an optical axis of the camera. Advantageously, the angle between the plane of the partially silvered mirror and the optical axis of the camera may be approximately 45°. Alternatively, a prism may be employed as the beam splitter.

A beam rotator may be provided and located to intersect the optical axis of the camera, between the camera and the monitor. The beam rotator operates to rotate the picture produced on the monitor before it is photographed by the camera.

In another embodiment, a television display, separate from the television monitor, may be provided on which the light pattern is viewed by an audience.

Manual control devices may be provided for varying optical parameters of the system including varying the relative positions of at least one of the television camera, television monitor, light source and beam splitter with respect to the remaining components of the apparatus to vary the light pattern produced by the apparatus. In addition the television monitor and camera employed may have colour capabilities. The chrominance and luminance of the picture on the television monitor may be varied to vary the colour and intensity of the light patterns produced by the apparatus.

The present invention also embraces methods for producing light patterns including the basic steps of directing a television camera at a television monitor, coupling the video output signal from the camera to the television monitor, locating a beam splitter in the optical path of the television camera, and directing a light source onto the beam splitter so that a portion of the light from the source is reflected toward the camera by the beam splitter. The light patterns occurring on the television monitor may be varied to produce aesthetically desirable effects by varying one or more of the following operational parameters of the system: the colour, pattern and/or intensity of the light source, the position of the light source and angle of impingement on the beam splitter, the location of the television camera with respect to the television monitor, the orientation of the television camera with respect to the television monitor, the focal length, magnification and iris setting of the television camera, and the chrominance and luminance settings of the television monitor or camera. The control of these various parameters may be coordinated by a master computer control system responsive to a manual input controller such as a touch pad or keyboard. The master computer control may also store and recall parameter settings to reproducing patterns.

Some embodiments of the invention will now be described, by way of example, with reference to the accompanying drawings, in which:-

Figure 1 is a pictorial view of an apparatus according to the invention for producing light patterns,

Figure 2 is a schematic plan view of an electronically controlled apparatus for producing light patterns according to the invention, and

Figures 3a - 3f are examples of video displays which can be produced by the techniques of the present invention.

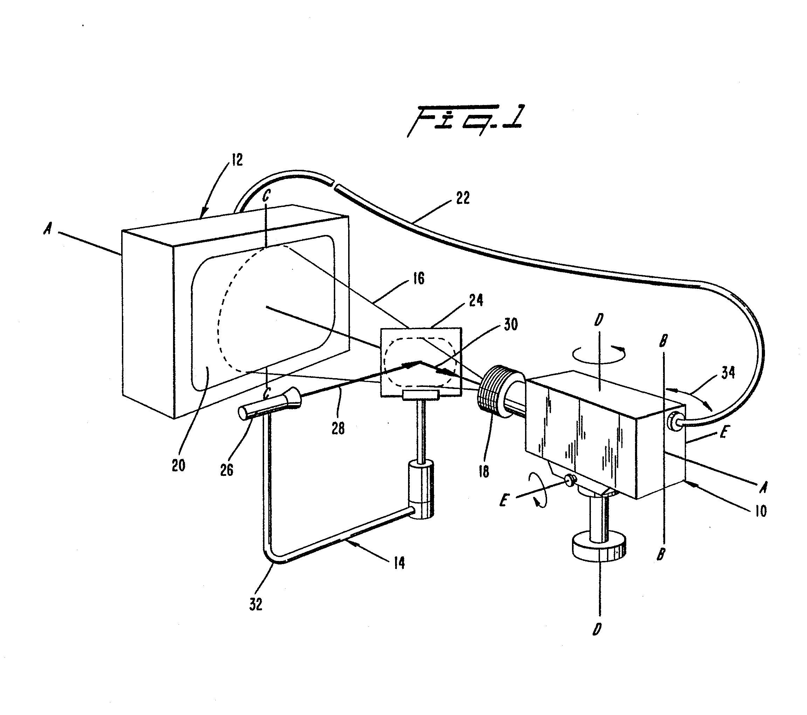

Figure 1 is a pictorial view of an apparatus for producing light patterns or displays in accordance with the teachings of the present invention. In its simplest form, the apparatus includes a television camera 10, a television monitor 12, and an apparatus 14 for introducing a light beam into the camera 10.

As used herein the words "television camera" are meant to indicate an optical-electronic device for converting light patterns or images in a field of view of the camera into an electronic video signal representative of the light pattern or image, including without limitation devices employing vidicon tubes, phototransistor arrays, charge coupled detectors, etc. Further, as used herein the words "television monitor" are meant to indicate an optical-electrical device capable of receiving an electronic video signal from a television camera and producing a light display representative of the light pattern or image in the field of view of the television camera, including without limitation, devices employing cathode ray tubes, liquid crystal displays, scanning projection systems, etc.

With continued reference to Figure 1, the television camera 10 is shown having a field of view represented schematically by a cone 16. The field of view may be varied by adjusting a zoom lens 18 of the camera. As shown in Figure 1, the field of view of the camera includes at least a portion of a display screen 20 of the television monitor 12. Lying within the field of view of the camera is an optical axis A-A of the camera. While the optical axis shown in Figure 1 is a straight line centered in the cone 16, it will be readily understood that the optical axis and the field of view of the camera may be folded by a mirror arrangement, rotated by a beam rotator, or otherwise modified by standard optical devices which act on light passing therethrough.

An electronic video output signal of the television camera 10 may be coupled to an input terminal of the television monitor 12 by means of a cable 22 or other suitable signal transmission device or devices. As a result of this feedback loop, an infinite regress of patterns or images may be produced by the television camera and television monitor, creating, in some instances repetitive, nested images triggered by light impinging on the camera.

Light is introduced in a controlled manner at a controlled position in the field of view of the camera by means of the apparatus 14. The apparatus 14 may include a beam splitter 24 and a light source 26, the latter element being located out of the field of view 16 of the television camera 10. As used herein, the term "beam splitter" includes optical elements which are partially light transmissive and partially light reflective such as helf silvered mirrors or prisms. It should be noted that half silvered mirrors have been employed in video applications, such as teleprompters to superimpose an image from a cathode ray tube onto a field of view. A similar technique is illustrated in U.S. Patent No. 3,900,703 to Tickle.

In Figure 1 the beam splitter 24 is a planar, partially silvered mirror, the plane of the mirror being oriented at an angle with respect to the optical axis A-A of the camera 10. In a preferred embodiment the plane of the mirror 24 may be oriented at a 45° angle with respect to the optical axis A-A, and the light source 26 may be oriented so that a beam of light 28 produced by the light source is perpendicular to the optical axis A-A. This arrangement permits the beam of light 28 to be reflected by the mirror into the lens of the camera 10. The reflected light beam is indicated by the arrow 30. Simultaneously a portion of the light from the television monitor may pass through the mirror to the camera lens.

A working embodiment of the apparatus of Figure 1 has been constructed employing a Panasonic WV 3100 series camera, having a 6:1, fl.4 zoom lens, and a RCA VFM 575 colour monitor. A mounting axis D-D of the camera was located approximately 1 m from the television monitor 12. The partially silvered mirror 24 employed was approximately 250mm x 250mm in size and located approximately 300mm from the mounting axis D-D. A small battery powered light bulb was employed as the light source 26. For some effects a small flashlight could be substituted as the light source. For other patterns the light source may be located in fixed position with respect to the half silvered mirror by a supporting member such as the L-shaped rod 32 shown in Figure 1. A second colour television monitor may also be used at a light source.

In operation the apparatus of Figure 1 can be employed to produce varying coloured light patterns on the television monitor 12. A principal technique for producing these light patterns is to vary the relative position, size and intensity of the reflected light beam impinging the lens of the camera 10. This may be accomplished by moving the camera, light source and/or mirror relative to one another. In this manner the moving light beam may be employed in a manner similar to an artist's paint brush, to paint transient colour images on the display screen. Variations in the pattern may be introduced by adjusting luminance or chrominance controls on either the television monitor 12 or the television camera 10.

Interesting optical effects and patterns can be produced by rotating a vertical axis B-B of the camera with respect to the vertical image axis C-C of the television monitor 12. When the camera is in the position shown in Figure 1, axis B-B is parallel to axis C-C and, therefore, the picture displayed on the television monitor is not rotated with respect to the pattern or image impinging on the camera field of view. However, if the axis B-B is rotated, for example, as indicated by the arrow 34, multiple regressing patterns or images appearing on the display screen will be successively rotated by a like angular amount. In many configurations of locations of the elements of the apparatus of Figure 1, these nested, rotated images are not visible nor discrete. Rather, the displayed patterns or images are of unpredictable complexity produced by the interaction of the optical components of the system.

Variations in the patterns can also be produced by changing the orientation of the camera slightly about axes D-D or E-E. Translation of the camera, caused by manually shaking the camera may also be employed to produce interesting effects.

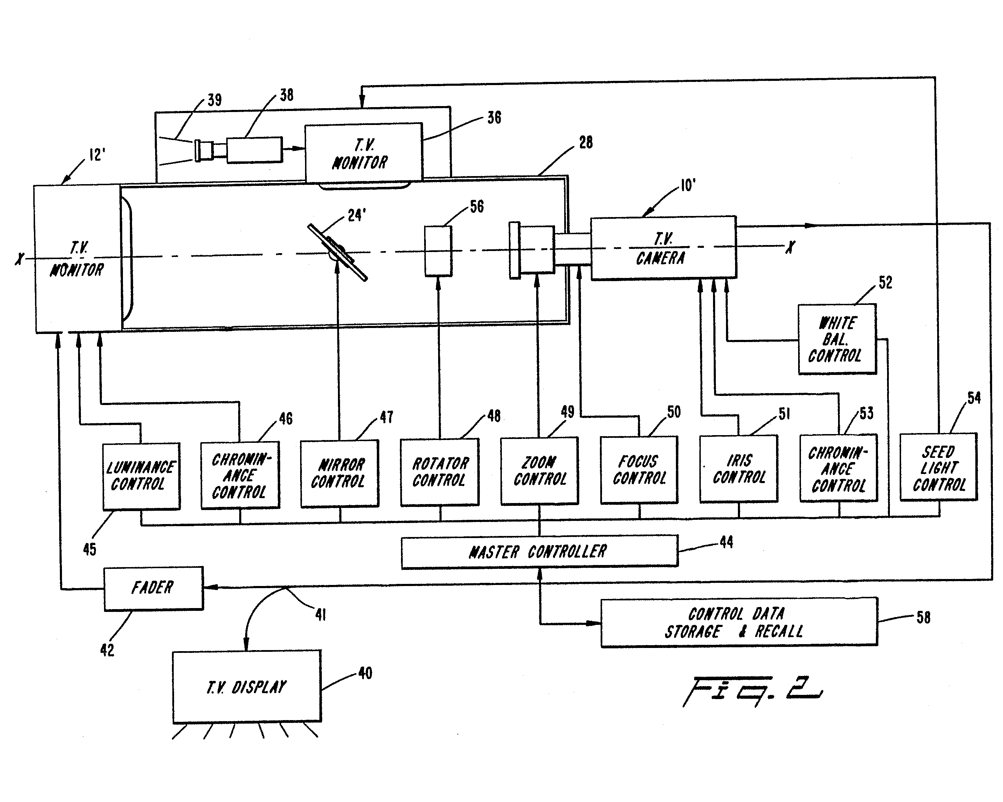

Figure 2 is a schematic plan view of an electrically controlled apparatus for producing light patterns according to the teachings of the present invention. The apparatus includes the television monitor 12', television camera 10' and optical beam splitter 24', similar to that shown in Figure 1. All of these elements may be encased in an enclosure 28 to exclude external light stimuli from the system to provide better control of the light patterns produced. The external or seed light source may comprise a second television monitor 36. A signal may be provided to the television monitor 36 by a second television camera 38. An image produced on the monitor 36 may be of lights or objects introduced into the field of view 39 of the camera 38.

An audience may view the light display produced by the system on a television display 40 which receives a video signal for the television camera 10'. The feedback loop to the television monitor 12' is provided through a "Y" connection 41 which simultaneously provides essentially the same video signal to both the television display 40 and the television monitor 12'. The intensity of the image returned to the monitor 12' may be reduced or enhanced by fader 42.

Optical, electrical and positional parameters of the apparatus may be controlled by means of a master controller 44 which drives slave controller circuits 45 through 54. Luminance and chrominance control circuits 45 and 46 adjust the brightness and colour content of the video display produced by the television monitor 12'. Distortions of the normal colour output of the television monitor and camera by means of the television chrominance control 46 and camera chrominance control 53 may provide a desired colouration to patterns produced by the system particularly when the seed light source is a source of white light. Mirror control ciruit 47 may be employed to mechanically adjust the position of the partially silvered mirror 24'. Rotator control circuit 48 may adjust a beam rotator 56 which has the effect of rotating the image received by the television camera 10' about the optical axis of the camera X-X. The effect is similar to the rotation of the camera about axis A-A, discussed in connection with Figure 1.

Zoom control circuit 49 and focus control circuit 50 may electronically activate power zoom and power focus drivers in the television camera. By modifying the focal length and field of view of the television camera variations in the displayed pattern are produced. An iris control circuit 51, and white balance control circuit 52 together with the monitor luminance control 45, may be used to adjust the intensity of the displayed pattern. Advantageously, these controls may be adjusted to produce a dark screen on the monitor in the prolonged absence of seed light, and to prevent the production of a completely white screen on the introduction of the seed light. Seed light control circuit 56 may be employed to vary the intensity, colour content and image produced on the display screen of the second television monitor 36 or other seed light source.

The master controller 44 may itself be controlled by manual actuation devices such as touch pads or keyboards actuated by the artist. In addition a control data storage and recall circuit 58 may be employed to memorize settings or the various slave control circuits and recall these settings to reproduce desirable patterns whose parameters were previously memorized. In order to insure that the effects are reproducible, the camera and monitor sweeps may be synchronized.

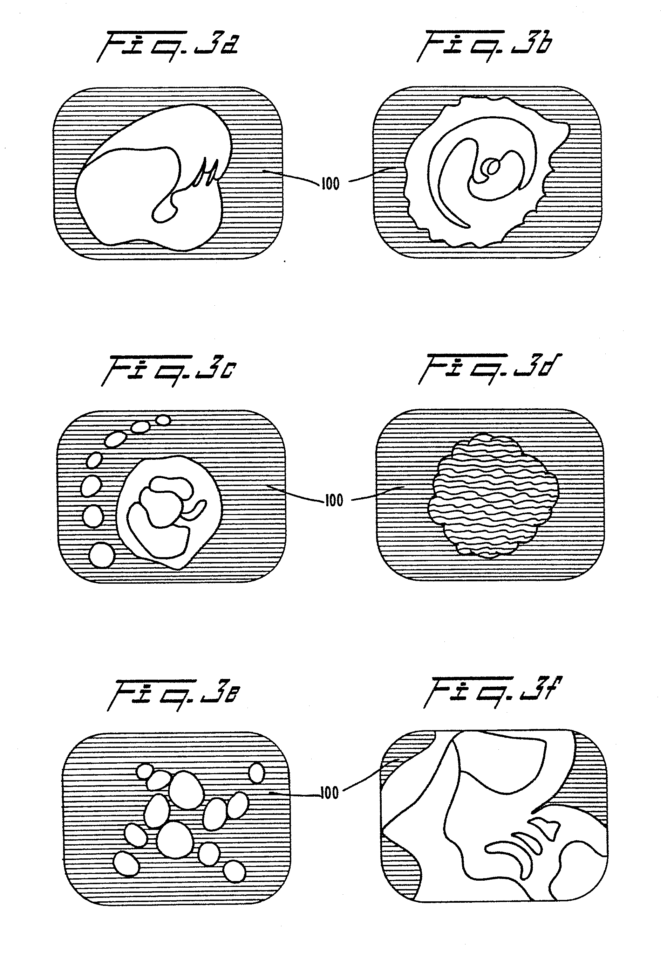

Figures 3a - 3f are examples of video displays which can be produced according to the teachings of the present invention. These examples are by no means exhaustive of the many varied and seemingly unpredictable patterns which are produced by a system such as described in connection with Figure 1.

Figures 3a - 3f are line drawings of still video displays produced with the apparatus of Figure 1. The actual displays are, at least to some degree, unstable and sometimes vary rapidly in streaking, cascading or swirling motion. Under many circumstances moving the light source with respect to the camera acts as kind of light brush which produces an abstract impression of the motion imparted to the light source by the artist operating the system.

In Figures 3a - 3f the darkened screen background is indicated by the parallel horizontal lines 100. Pattern lines shown on the darkened background are employed to indicate different colour areas in the display. Sometimes the colour change from area to area is abrupt, in other displays colour gradation may be gradual.

Figures 3a and 3b are illustrative of rotating, globular patterns which may be produced by the apparatus. Figure 3c is illustrative of a pattern which tends to follow movement of the light source. Figure 3b is illustrative of a pattern comprising a striated single colour mass in the center of the screen. Figure 3e is illustrative of a pattern having radiating arms. Finally, Figure 3f is illustrative of a globular coloured pattern which almost fills the display monitor screen.

It will be apparent from the foregoing that the techniques described herein are adapted to highly varied and expressive light displays which are not rigidly determined by hardware or software constraints in the apparatus that produces the pattern.

Claims:

1.    An apparatus for producing a video display comprising a television monitor (12) and a television camera (10) having an optical axis (A-A) which intersects a display screen (20) of the television monitor (12), characterised in that an output video signal from the camera (10) is applied to the television monitor (12) to produce a picture on the display screen (20) thereof, and means for introducing a light beam (30) into the camera (10) includes a partially light reflective and partially light transmissive member (24) located in the optical path of the camera (10) between the monitor (12) and the camera (10).

2.    Apparatus as claimed in Claim 1, wherein the light beam (30) emanates from a localized light source (26) out of the optical path of the camera (10).

3.    Apparatus as claimed in Claim 1, wherein the television monitor is a first cathode ray tube monitor (12') and wherein the light beam introduced into the camera (10') emanates from a second television monitor (36).

4.    Apparatus as claimed in any one of Claims 1 to 3, wherein the position of the camera (10) is varied with respect to the position of the monitor (12), light beam (30) and the partially light reflective and partially light transmissive member (24), to vary a pattern produced on the display screen (20) of the television monitor (12).

5. An apparatus for producing a light display comprising a television monitor (12) and a television camera (10) having a field of view which includes a display screen (20) of the television monitor (12), characterised in that an output video signal from the camera (10) is applied to circuitry of the television controlling in real time the picture on the display screen (20), a light source (26) is located out of the field of the camera (10), and a beam splitter (24) is located between the monitor (12) and the camera (10) and in the field of view of the camera (10), for reflecting light from the light source (26) towards the camera (10) and transmitting light from the monitor (12) to the camera (10).

6. Apparatus as claimed in Claim 5, wherein the beam splitter (24) is a partially silvered planar mirror, the plane of the mirror being oriented at an angle with respect to an optical axis (A-A) of the camera (10).

7. Apparatus as claimed in Claim 5, wherein the plane of the partially silvered mirror is oriented at about a 45° angle with respect to the optical axis (A-A) of the camera (10).

8. Apparatus as claimed in Claim 5, wherein the beam splitter (24) is a prism.

9. Apparatus as claimed in any one of Claims 5 to 8, wherein the beam splitter (24) and the display screen (20) of the television monitor (12) occupy, at least in part, a coextensive portion of the field of view of the camera (10).

10. Apparatus as claimed in any one of Claims 5 to 9, further comprising a beam rotator (56) on the optical axis (X-X) of the camera (10') between the camera and the monitor (12').

11.    Apparatus as claimed in any one of Claims 5 to 10, wherein the light source is a second television monitor (36).

12.    Apparatus as claimed in any one of Claims 5 to 11, further comprising manual control means for varying the relative positions of at least one of the television camera (10), television monitor (12), light source (26) and beam splitter (24) with respect to the remaining components of the apparatus to vary light patterns produced by the apparatus.

13.    Apparatus as claimed in any one of Claims 5 to 12, wherein the television monitor (12') is a colour television monitor and the television camera (10') is a colour television camera, and wherein a chrominance control (46; 53) on at least one of the television camera (10') and the television monitor (12') is varied to vary a colour composition of a pattern produced by the apparatus.

14.    A method for producing light patterns in which a television camera (10) is directed at a television monitor (12), characterised by coupling a video output signal from said camera (10) to the television monitor (12), locating a beam splitter (24) in the optical path of the television camera (10), directing a light beam (28) onto the beam splitter (24) so that a portion (30) of the light beam is reflected toward the television camera (10) by the beam splitter (24), and varying the relative positions of the reflected light beam (30) and the camera (10) whereby varying light patterns a produced on the television monitor (12).

15.    A method as claimed in Claim 14, further comprising varying the luminance of the display of the television monitor (12') so that the display is essentially dark in the absence of said light beam and so that the display is not completely white in the presence of said light beam.

16.    A method as claimed in Claim 14 or Claim 15, wherein the light beam directed onto the beam splitter (24') emanates from a second television monitor (36).

17.    A method as claimed in Claim 14, further comprising the step of varying the intensity of the light beam to produce varying light patterns on the television monitor (12).

18.    A method as claimed in Claim 14, wherein the position at which the light beam impinges on the beam splitter (24) is varied by manually moving a light source (26) with respect to the beam splitter (24).

19.    A method as claimed in Claim 14, wherein the location of the television camera (10) with respect to the television monitor (12) is varied to produce varying light patterns on the television monitor (12).

20.    A method as claimed in Claim 14, wherein the orientation of the television camera (10) with respect to the television monitor (12) is varied to produced varying light patterns on the television monitor (12).

21.    A method as claimed in Claim 14, wherein the focal length of the television camera (10) is varied to produce varying light patterns on the television monitor (12).

22.    A method as claimed in Claim 14, wherein the colour tint controls of the television monitor (12) are adjusted to produce varying colouration patterns on the television monitor (12).

Fig.1

Fig. 2

Fig.3a

Fig.3b

Fig.3c

Fig.3d

Fig.3e

Fig.3f